# EUROPEAN PATENT APPLICATION

(11) **EP 4 372 258 A1**
(43) Date of publication of application: **22.05.2024**
(21) Application number: 22841924.8
(22) Date of filing: 27.06.2022
(51) Int. Cl.: F16K 31/04

(54) **ELECTRIC VALVE**

(30) Priority: 14.07.2021 JP 2021116728
(71) Applicant: Fujikoki Corporation, Tokyo 158-0082 (JP)
(72) Inventor: NARUKAWA Bunta, Tokyo 158-0082 (JP); HAYASHI Akihiro, Tokyo 158-0082 (JP)
(74) Representative: Ter Meer Steinmeister & Partner
(86) International application number: PCT/JP2022/025520
(87) International publication number: WO 2023/286580

(57) **Abstract**

[Object] Provided is an electric valve capable of obtaining desired flow-rate characteristics without depending on the shape of a valve member.

[Solution] A control device (200) of an electric valve 1 stores pulse number information relating to pulse numbers that are sequentially assigned from a valve closing position of a valve member (40) to a full-open position of the valve member and step angle information relating to step angles each of which corresponds to one of the pulse numbers. The control device (200) receives a valve-member movement command relating to a moving target position of the valve member (40) from a control unit (400). The control device (200) acquires pulse numbers that are assigned from a present position of the valve member (40) to the moving target position. The control device (200) rotates a stepping motor at the step angles corresponding to the pulse numbers assigned from the present position of the valve member (40) to the moving target position in the order of these pulse numbers.

## Description

### Technical Field

The present invention relates to an electric valve that is used in, for example, a refrigeration cycle system of an air-conditioning apparatus.

### Background Art

Patent Literature 1 discloses an electric valve of the related art. The electric valve described in Patent Literature 1 includes a valve member and a stepping motor. The valve member faces a valve port. The valve member is moved, as a result of rotation of the stepping motor, in a direction in which the valve member faces the valve port.

### Citation List

### Patent Literature

Patent Literature 1: Japanese Unexamined Patent Application Publication No. 8-268030

### Summary of Invention

### Technical Problem

In the electric valve described above, the stepping motor rotates in response to pulses. The rotation angle (the step angle) per pulse of the stepping motor is constant, and the amount of movement of the valve member per pulse is also constant. Thus, the flow-rate characteristics of the electric valve depend on the shape of the valve member. In order to obtain desired flow-rate characteristics, it is necessary to use a valve member that has a shape corresponding to the flow-rate characteristics.

Accordingly, an object of the present invention is to provide an electric valve capable of obtaining desired flow-rate characteristics without depending on the shape of a valve member.

### Solution to Problem

To obtain the above-described object, an electric valve according to the present invention includes a valve body that has a valve port, a valve member that faces the valve port, a driving mechanism that moves the valve member in a direction in which the valve member faces the valve port, and a control device that controls the driving mechanism. The driving mechanism includes a stepping motor, and rotation of the stepping motor causes the valve member to move. The control device includes a storage unit configured to store pulse number information and step angle information, the pulse number information relating to pulse numbers that are sequentially assigned from a reference position of the valve member to a full-open position of the valve member, and the step angle information relating to step angles each of which corresponds to one of the pulse numbers, a communication unit configured to receive a valve-member movement command from an external device, the valve-member movement command relating to a moving target position of the valve member, a computing unit configured to acquire the pulse numbers assigned from a present position of the valve member to the moving target position of the valve member, and a rotation control unit configured to rotate the stepping motor at the step angles corresponding to the pulse numbers, which are assigned from the present position of the valve member to the moving target position of the valve member, in an order of the pulse numbers.

In the present invention, it is preferable that a first section, a second section, and a third section be set between the reference position of the valve member and the full-open position of the valve member. It is preferable that a first angle be set as the step angle corresponding to the pulse numbers assigned to the first section. It is preferable that a second angle be set as the step angle corresponding to the pulse numbers assigned to the second section. It is preferable that a third angle be set as the step angle corresponding to the pulse numbers assigned to the third section. It is preferable that the first angle, the second angle, and the third angle be different from one another.

In the present invention, it is preferable that the first angle be a step angle in a micro-step operation that is 1/n of a step angle in a full-step operation of the stepping motor. It is preferable that the second angle be a step angle in a micro-step operation that is 1/m of the step angle in the full-step operation of the stepping motor. It is preferable that the third angle be the step angle in the full-step operation of the stepping motor. Note that m and n are each a natural number of two or more, with a condition that m ≠ n.

In the present invention, it is preferable that the valve member have a tapered surface such that a diameter of the valve member decreases toward the valve port. It is preferable that, when the valve member is in the first section, the second section, or the third section, a flow rate be determined by a gap between the tapered surface and an inner circumferential surface of the valve port.

In the present invention, it is preferable that a pulse rate when the valve member is in the first section be n times a pulse rate when the valve member is in the third section. It is preferable that a pulse rate when the valve member is in the second section be m times the pulse rate when the valve member is in the third section.

In the present invention, it is preferable that a first section and a second section be set between the reference position of the valve member and the full-open position of the valve member. It is preferable that a first angle be set as the step angle corresponding to the pulse numbers assigned to the first section. It is preferable that a second angle be set as the step angle corresponding to the pulse numbers assigned to the second section. It is preferable that the first angle and the second angle be different from each other.

In the present invention, it is preferable that the first angle be a step angle in a micro-step operation that is 1/n of a step angle in a full-step operation of the stepping motor. It is preferable that the second angle be the step angle in the full-step operation of the stepping motor. Note that n is a natural number of two or more.

In the present invention, it is preferable that the valve member have a tapered surface such that a diameter of the valve member decreases toward the valve port. It is preferable that, when the valve member is in the first section or the second section, a flow rate be determined by a gap between the tapered surface and an inner circumferential surface of the valve port.

In the present invention, it is preferable that a pulse rate when the valve member is in the first section be n times a pulse rate when the valve member is in the second section.

In the present invention, it is preferable that the storage unit store start-up-state pulse-number information and start-up-state step-angle information, the start-up-state pulse-number information relating to pulse numbers that are sequentially assigned from the reference position of the valve member to the full-open position of the valve member, and the start-up-state step-angle information relating to step angles each of which corresponds to one of the pulse numbers of the start-up-state pulse-number information. It is preferable that the storage unit store normal-operating-state pulse-number information and normal-operating-state step-angle information, the normal-operating-state pulse-number information relating to pulse numbers that are sequentially assigned from the reference position of the valve member to the full-open position of the valve member, and the normal-operating-state step-angle information relating to step angles each of which corresponds to one of the pulse numbers of the normal-operating-state pulse-number information. It is preferable that the control device use, in a start-up state, the start-up-state pulse-number information and the start-up-state step-angle information as the pulse number information and the step angle information and use, in a normal operating state after transitioning from the start-up state, the normal-operating-state pulse-number information and the normal-operating-state step-angle information as the pulse number information and the step angle information.

In the present invention, it is preferable that, when the communication unit receives a normal-operation start command from an external device in the start-up state, the control device make a transition to the normal operating state.

In the present invention, it is preferable that, when the valve member moves to a predetermined start-up completion position in the start-up state, the control device make a transition to the normal operating state.

### Advantageous Effects of Invention

According to the present invention, the control device of the electric valve stores the pulse number information relating to the pulse numbers that are sequentially assigned from the reference position of the valve member to the full-open position of the valve member and the step angle information relating to the step angles each of which corresponds to one of the pulse numbers. The control device receives the valve-member movement command relating to the moving target position of the valve member from the external device. The control device acquires the pulse numbers assigned from the present position of the valve member to the moving target position. The control device rotates the stepping motor at the step angles corresponding to the pulse numbers assigned from the present position of the valve member to the moving target position in the order of these pulse numbers. With this configuration, the electric valve can individually set a step angle for each pulse assigned from the reference position of the valve member to the full-open position and can adjust the amount of movement of the valve member per pulse (i.e., the amount of change in the flow rate of a refrigerant flowing through a valve port). Therefore, in the electric valve, desired flow-rate characteristics can be obtained without depending on the shape of a valve member.

### Brief Description of Drawings

[Fig. 1] Fig. 1 is a sectional view of an electric valve according to an embodiment of the present invention.
[Fig. 2] Fig. 2 is a sectional view of a stator unit of the electric valve illustrated in Fig. 1.
[Fig. 3] Fig. 3 is an enlarged sectional view of a valve member and members in its vicinity that are included in the electric valve illustrated in Fig. 1 when the valve member of the electric valve is located at a valve closing position.
[Fig. 4] Fig. 4 is an enlarged sectional view of the valve member and the members in its vicinity that are included in the electric valve illustrated in Fig. 1 when the valve member is located at a full-open position.
[Fig. 5] Fig. 5 is a graph illustrating a relationship between valve opening degree and flow rate in the electric valve illustrated in Fig. 1.
[Fig. 6] Fig. 6 is a diagram illustrating a positional relationship between a magnet rotor and a stator that are included in the electric valve illustrated in Fig. 1.
[Fig. 7] Fig. 7 is a functional block diagram of the electric valve illustrated in Fig. 1.
[Fig. 8] Fig. 8 is a diagram illustrating a table relating to pulse number information and step angle information that are stored in a control device of the electric valve illustrated in Fig. 1.
[Fig. 9] Fig. 9 is a diagram illustrating a relationship between each pulse number and a position of the valve member, each of the pulse numbers being shown in the table in Fig. 8 and being assigned from the valve closing position to the full-open position.
[Fig. 10] Fig. 10 is a graph illustrating a relationship between the position of the valve member and the flow rate when a stepping motor of the electric valve illustrated in Fig. 1 rotates on the basis of the table illustrated in Fig. 8.
[Fig. 11] Fig. 11 is a diagram illustrating a modification of the table illustrated in Fig. 8.
[Fig. 12] Fig. 12 is a diagram illustrating a relationship between each pulse number and the position of the valve member, each of the pulse numbers being shown in the table in Fig. 11 and being assigned from the valve closing position to the full-open position.
[Fig. 13] Fig. 13 is a graph illustrating a relationship between the position of the valve member and the flow rate when the stepping motor of the electric valve illustrated in Fig. 1 rotates on the basis of the table illustrated in Fig. 11.
[Fig. 14] Fig. 14 is a diagram illustrating another modification of the table illustrated in Fig. 8.
[Fig. 15] Fig. 15 is a diagram illustrating a relationship between each pulse number and the position of the valve member, each of the pulse numbers being shown in the table in Fig. 14 and being assigned from the valve closing position to the full-open position.
[Fig. 16] Fig. 16 is a graph illustrating a relationship between the position of the valve member and the flow rate when the stepping motor of the electric valve illustrated in Fig. 1 rotates on the basis of the table illustrated in Fig. 14.

### Description of Embodiments

### (Embodiment)

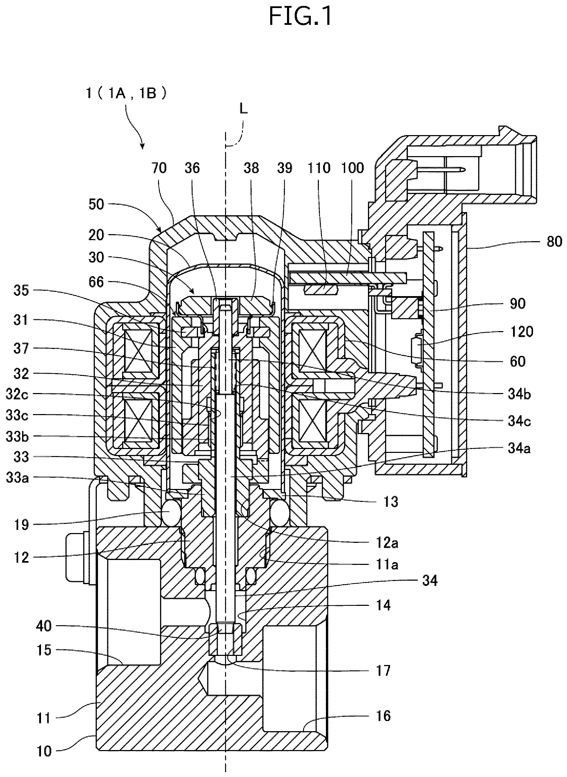

An electric valve 1 according to an embodiment of the present invention will be described below with reference to Fig. 1 to Fig. 10. For example, the electric valve 1 is incorporated in a refrigeration cycle system of an air-conditioning apparatus and operates in accordance with a command from a control unit 400 of the air-conditioning apparatus. The control unit 400 is an external device that is provided outside the electric valve 1.

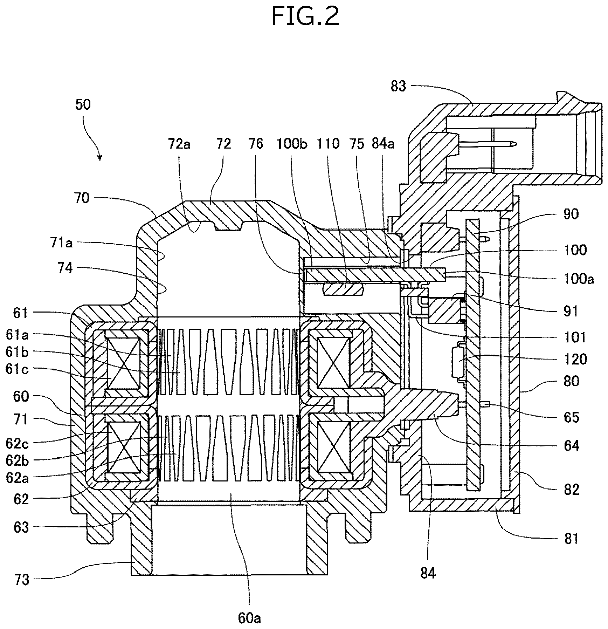

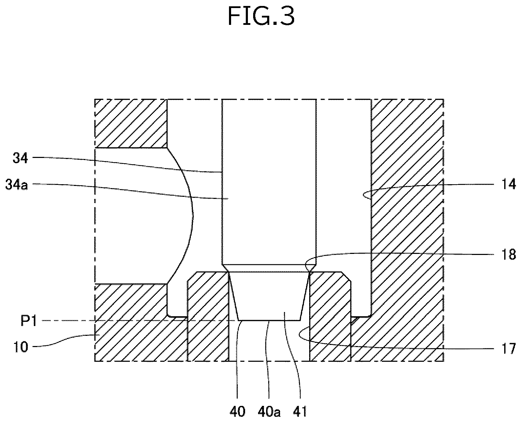

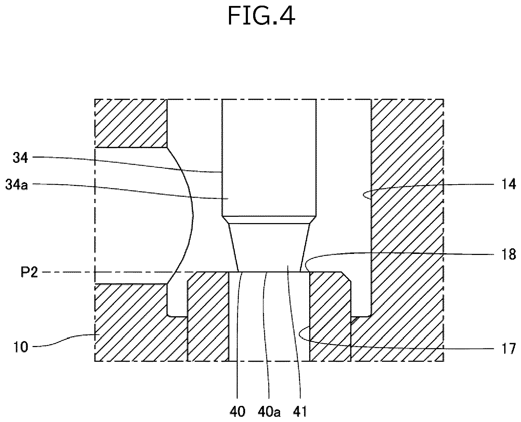

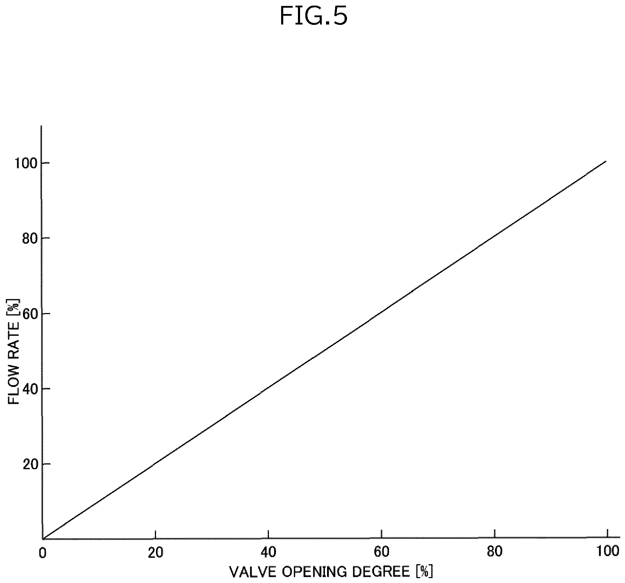

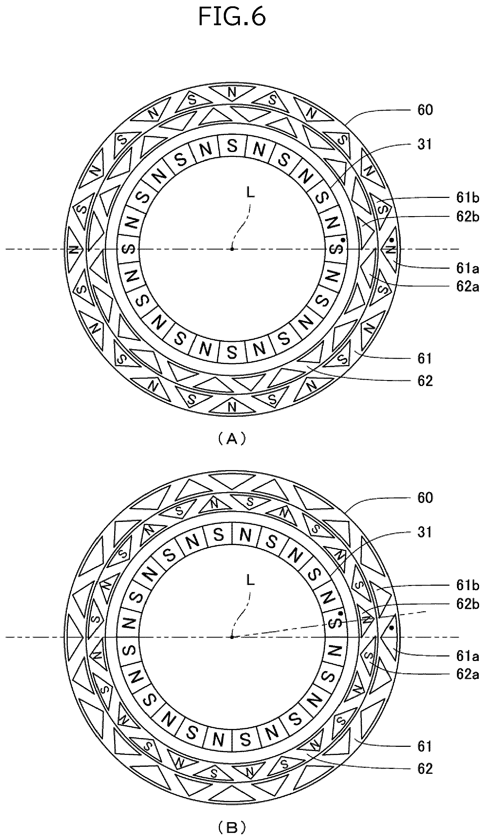

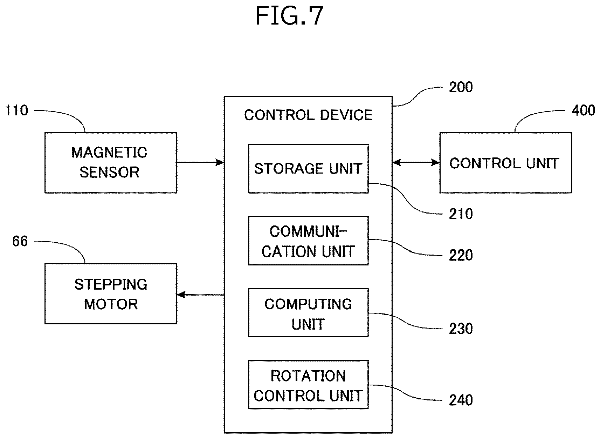

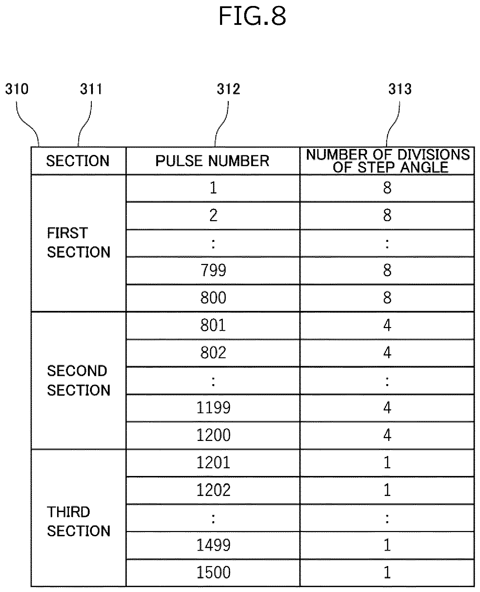

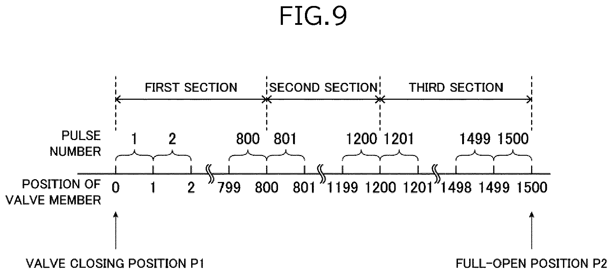

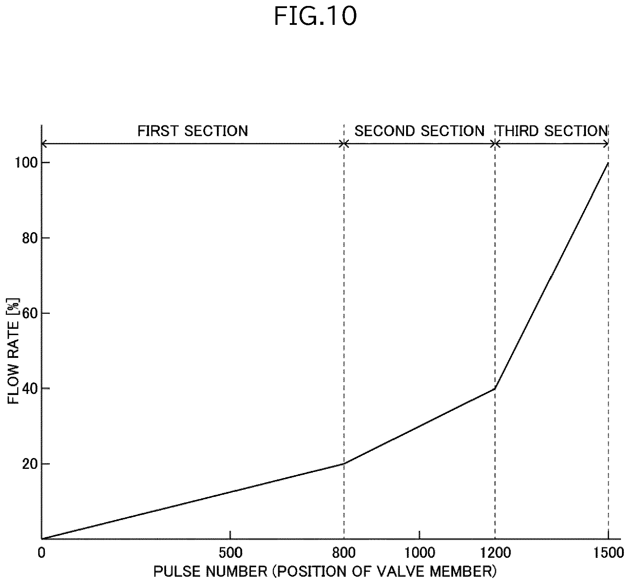

Fig. 1 is a sectional view of the electric valve according to the embodiment of the present invention. Fig. 2 is a sectional view of a stator unit of the electric valve illustrated in Fig. 1. Fig. 3 and Fig. 4 are each an enlarged sectional view of a valve member and members in its vicinity that are included in the electric valve illustrated in Fig. 1. Fig. 3 illustrates a state where the valve member is located at a valve closing position. Fig. 4 illustrates a state where the valve member is located at a full-open position. Fig. 5 is a graph illustrating a relationship between valve opening degree and flow rate in the electric valve illustrated in Fig. 1. Fig. 6 is a diagram illustrating a positional relationship between a magnet rotor and a stator that are included in the electric valve illustrated in Fig. 1. Fig. 6A illustrates a state where magnetic poles of the magnet rotor and pole teeth of an A-phase stator face each other. Fig. 6B illustrates a state where the magnetic poles of the magnet rotor and pole teeth of a B-phase stator face each other. Fig. 7 is a functional block diagram of the electric valve illustrated in Fig. 1. Fig. 8 is a diagram illustrating a table relating to pulse number information and step angle information that are stored in a control device of the electric valve illustrated in Fig. 1. Fig. 9 is a diagram illustrating a relationship between each pulse number and a position of the valve member, each of the pulse numbers being shown in the table in Fig. 8 and being assigned from the valve closing position to the full-open position. Fig. 10 is a graph illustrating a relationship between the position of the valve member and the flow rate when a stepping motor of the electric valve illustrated in Fig. 1 rotates on the basis of the table illustrated in Fig. 8.

As illustrated in Fig. 1 and Fig. 2, the electric valve 1 includes a valve body 10, a can 20, a driving mechanism 30, and a valve member 40.

The valve body 10 is made of a metal such as an aluminum alloy. The valve body 10 includes a body member 11, a supporting member 12, and a connecting member 13. The body member 11 has a rectangular parallelepiped shape. The body member 11 includes a valve chamber 14 and flow channels 15 and 16. The flow channel 15 is connected to the valve chamber 14. The flow channel 16 is connected to the valve chamber 14 via a valve port 17. In the valve chamber 14, the valve port 17 is enclosed by a valve seat 18 that has a circular annular shape. A mounting hole 11a is formed in an upper surface of the body member 11 so as to communicate with the valve chamber 14. The supporting member 12 has a circular cylindrical shape. The supporting member 12 is attached to the mounting hole 11a of the body member 11 by using a screw structure. An upper portion of the supporting member 12 projects from the upper surface of the body member 11. The connecting member 13 has a circular annular plate-like shape. The inner circumferential edge of the connecting member 13 is joined to an upper end of the supporting member 12.

The can 20 is made of a metal such as a stainless steel. The can 20 has a circular cylindrical shape whose lower end is open and whose upper end is closed. The lower end of the can 20 is joined to an outer circumferential edge of the connecting member 13.

The driving mechanism 30 causes the valve member 40 to move in the vertical direction (a direction in which an axis L extends). The driving mechanism 30 includes a magnet rotor 31, a valve stem holder 32, a guide bush 33, a valve stem 34, a permanent magnet 38, and a stator unit 50.

The magnet rotor 31 has a circular cylindrical shape. The outer diameter of the magnet rotor 31 is slightly smaller than the inner diameter of the can 20. The magnet rotor 31 has a plurality of N-poles and a plurality of S-poles. The plurality of N-poles and the plurality of S-poles are arranged at the outer circumferential surface of the magnet rotor 31. The plurality of N-poles and the plurality of S-poles each extend in the vertical direction. The plurality of N-poles and the plurality of S-poles are alternately arranged at equal angular intervals in a circumferential direction. In the present embodiment, the magnet rotor 31 has 12 N-poles and 12 S-poles. The angle between each of the N-poles and the adjacent S-pole is 15 degrees.

The valve stem holder 32 has a circular cylindrical shape whose lower end is open and whose upper end is closed. A supporting ring 35 is fixed to an upper end of the valve stem holder 32. The supporting ring 35 connects the magnet rotor 31 and the valve stem holder 32 to each other. An internal thread 32c is formed in the inner circumferential surface of the valve stem holder 32.

The guide bush 33 includes a base portion 33a and a valve-stem supporting portion 33b. The base portion 33a and the valve-stem supporting portion 33b each have a circular cylindrical shape. The base portion 33a is press-fitted into a fitting hole 12a that is formed in the supporting member 12. The outer diameter of the valve-stem supporting portion 33b is smaller than the outer diameter of the base portion 33a. The inner diameter of the valve-stem supporting portion 33b is the same as the inner diameter of the base portion 33a. The valve-stem supporting portion 33b is coaxially connected to an upper end of the base portion 33a. An external thread 33c is formed on the outer circumferential surface of the valve-stem supporting portion 33b. The external thread 33c is screwed into the internal thread 32c of the valve stem holder 32. The guide bush 33 is connected to the supporting member 12.

The valve stem 34 includes a large-diameter portion 34a and a small-diameter portion 34b. The large-diameter portion 34a and the small-diameter portion 34b each has a circular columnar shape. The outer diameter of the large-diameter portion 34a is slightly smaller than the inner diameter of the guide bush 33. The outer diameter of the small-diameter portion 34b is smaller than the outer diameter of the large-diameter portion 34a. The small-diameter portion 34b is coaxially connected to an upper end of the large-diameter portion 34a. The small-diameter portion 34b extends through the valve stem holder 32. A push nut 36 for retaining is attached to the small-diameter portion 34b. The valve stem 34 is positioned inside the guide bush 33 and inside the supporting member 12. The valve stem 34 is supported by the guide bush 33 so as to be slidable in the vertical direction. A lower end of the valve stem 34 is positioned in the valve chamber 14. The valve stem 34 includes a step portion 34c between the large-diameter portion 34a and the small-diameter portion 34b. The step portion 34c is a circular annular flat surface that faces upward. A valve closing spring 37 is disposed between the valve stem holder 32 and the step portion 34c. The valve closing spring 37 is a compression-coil spring. The valve closing spring 37 presses the valve stem 34 downward.

The permanent magnet 38 is disposed above the magnet rotor 31 inside the can 20. The permanent magnet 38 has a circular annular, flat plate-like shape. The permanent magnet 38 has a single N-pole and a single S-pole. When the permanent magnet 38 is divided into two portions by its diameter, the N-pole is located at one of the portions, and the S-pole is located at the other portion. The permanent magnet 38 is fixed to the supporting ring 35 with a fixing member 39 interposed therebetween. The permanent magnet 38 is rotated together with the magnet rotor 31.

The valve member 40 is integrally connected to a lower end of the large-diameter portion 34a of the valve stem 34. The valve member 40 is disposed in the valve chamber 14. The valve member 40 faces the valve port 17 in the vertical direction. The valve member 40 has a tapered surface 41 such that its diameter gradually decreases toward the valve port 17. The tapered surface 41 extends in the axis L direction from a position near the lower end of the large-diameter portion 34a of the valve stem 34 to a tip end 40a of the valve member 40. The vertical direction is the same as the directions in which the valve member 40 and the valve port 17 face each other. Note that the valve member 40 may have a plurality of tapered surfaces having different taper angles.

The valve member 40 is moved in the vertical direction by the driving mechanism 30. The valve port 17 is opened and closed by the movement of the valve element 40. The valve member 40 is moved from a valve closing position P1 (Fig. 3) to a full-open position P2 (Fig. 4). The valve closing position P1 is a position of the valve member 40 at which the tapered surface 41 is in contact with the valve seat 18. The valve closing position P1 is a reference position. The full-open position P2 is a position of the valve member 40 at which the position of the tip end 40a of the valve member 40 in the vertical direction is the same as the position of the valve seat 18 in the vertical direction. In the electric valve 1, the flow rate of refrigerant that flows through the valve port 17 depends on the size of a circular annular gap formed between the tapered surface 41 and the inner circumferential surface of the valve port 17.

The graph illustrated in Fig. 5 shows the relationship between the valve opening degree and the flow rate in the electric valve 1. The valve opening degree corresponds to the position of the valve member 40 with respect to the valve seat 18 (the amount by which the valve member 40 is lifted from the valve closed position P1). The valve opening degree is expressed as a percentage. When the valve member 40 is at the valve closing position P1, the valve opening degree is 0%, and when the valve member 40 is at the full-open position P2, the valve opening degree is 100%. The flow rate is the flow rate of the refrigerant that flows through the electric valve 1 (the valve port 17). The flow rate is expressed as a percentage. When the valve member 40 is at the valve closing position P1, the flow rate is 0%, and when the valve member 40 is at the full-open position P2, the flow rate is 100%. In the present embodiment, the flow rate is expressed as a percentage with respect to the Cv value. As illustrated in Fig. 5, a basic flow-rate characteristic of the electric valve 1 (the valve member 40) is a linear characteristic in which the flow rate linearly changes in proportion to the valve opening degree. Note that the valve member 40 may have, for example, a shape with which its basic flow-rate characteristic is an equal-percentage characteristic.

The stator unit 50 includes a stator 60, a housing 70, a case 80, a main circuit board 90, a sub circuit board 100, a magnetic sensor 110, and a microcomputer 120.

The stator 60 has a circular cylindrical shape. The stator 60 includes an A-phase stator 61, a B-phase stator 62, and a molded member 63 that is made of a synthetic resin.

The A-phase stator 61 includes a plurality of claw-pole type pole teeth 61a and 61b arranged on its inner circumferential side. The ends of the pole teeth 61a face downward, and the ends of the pole teeth 61b face upward. The pole teeth 61a and the pole teeth 61b are alternately arranged at equal angular intervals in the circumferential direction. In the present embodiment, the A-phase stator 61 includes 12 pole teeth 61a and 12 pole teeth 61b. The angle between each of the pole teeth 61a and the adjacent pole tooth 61b is 15 degrees. When a coil 61c of the A-phase stator 61 is energized, the pole teeth 61a and the pole teeth 61b have mutually opposite polarities.

The B-phase stator 62 includes a plurality of claw-pole type pole teeth 62a and 62b arranged on its inner circumferential side. The ends of the pole teeth 62a face downward, and the ends of the pole teeth 62b face upward. The pole teeth 62a and the pole teeth 62b are alternately arranged at equal angular intervals in the circumferential direction. In the present embodiment, the B-phase stator 62 includes 12 pole teeth 62a and 12 pole teeth 62b. The angle between each of the pole teeth 62a and the adjacent pole tooth 62b is 15 degrees. When a coil 62c of the B-phase stator 62 is energized, the pole teeth 62a and the pole teeth 62b have mutually opposite polarities.

The A-phase stator 61 and the B-phase stator 62 are arranged so as to be coaxial with each other. The A-phase stator 61 and the B-phase stator 62 are in contact with each other. When viewed in the direction in which an axis L extends, the angle between each of the pole teeth 61a of the A-phase stator 61 and the adjacent pole tooth 62a of the B-phase stator 62 is 7.5 degrees.

The A-phase stator 61 and the B-phase stator 62 are filled with the molded member 63. In addition, the molded member 63 forms, together with the pole teeth 61a and 61b and the pole teeth 62a and 62b, a stator inner circumferential surface 60a. The diameter of the stator inner circumferential surface 60a is the same as the diameter of the outer circumferential surface of the can 20. The molded member 63 includes a terminal supporting portion 64.

The terminal supporting portion 64 extends in the lateral direction (a direction perpendicular to the axis L) from the A-phase stator 61 and the B-phase stator 62. The terminal supporting portion 64 supports a plurality of terminals 65. Each of the plurality of terminals 65 projects in the lateral direction from an end of the terminal supporting portion 64. The plurality of terminals 65 are connected to the coil 61c of the A-phase stator 61 and the coil 62c of the B-phase stator 62.

The can 20 is disposed inside the stator 60. The magnet rotor 31 is disposed inside the can 20. The stator 60 and the magnet rotor 31 constitute a stepping motor 66.

The stepping motor 66 is capable of performing a full-step operation and a micro-step operation. The full-step operation is an operation that causes the magnet rotor 31 to rotate, in response to a single pulse input, from a position (the position illustrated in Fig. 6A) where the magnetic poles (the N-poles and the S-poles) face the pole teeth 61a and 61b of the A-phase stator 61 to a position (the position illustrated in Fig. 6B) where the magnetic poles face the pole teeth 62a and 62b of the B-phase stator 62, which are adjacent to the pole teeth 61a and 61b or is an operation that causes the magnet rotor 31 to rotate, in response to a single pulse input, from the position illustrated in Fig. 6B to the position illustrated in Fig. 6A. In Fig. 6A and Fig. 6B, a black dot is given to the magnetic pole that functions as a reference and to the pole tooth that functions as a reference. In the present embodiment, the rotation angle (a step angle) per pulse used in the full-step operation is 7.5 degrees. The micro-step operation is an operation that causes the magnet rotor 31 to rotate, in response to a single pulse input, at an angle obtained by equally dividing the step angle used in the full-step operation. The angle is a step angle used in the micro-step operation. The micro-step operation is performed by finely controlling the current value of the coil 61c of the A-phase stator 61 and the current value of the coil 62c of the B-phase stator 62. The step angle used in the micro-step operation is, for example, 0.9375 degrees (eight divisions), 1.875 degrees (four divisions), or 1.5 degrees (five divisions).

In the present embodiment, the stepping motor 66, in a state where the valve member 40 is at the valve closing position P1, performs the full-step operation of 500 pulses (rotation of the magnet rotor 31 by 3750 degrees), causing the valve member 40 to move to the full-open position P2.

The housing 70 is made of a synthetic resin. The housing 70 is formed by injection molding. The housing 70 accommodates the stator 60. The housing 70 includes a peripheral wall portion 71 and an upper wall portion 72.

The peripheral wall portion 71 has a circular cylindrical shape. The stator 60 is embedded in a center portion of the peripheral wall portion 71 in the vertical direction. The diameter of an inner circumferential surface 71a of the peripheral wall portion 71 is the same as the diameter of the stator inner circumferential surface 60a. The inner circumferential surface 71a is connected to the stator inner circumferential surface 60a with no difference in level. The upper wall portion 72 has a dome-like shape. The upper wall portion 72 is connected to an upper end of the peripheral wall portion 71. The inner circumferential surface 71a of the peripheral wall portion 71, the inner surface 72a of the upper wall portion 72, and the stator inner circumferential surface 60a define an inner space 74 of the stator unit 50. The can 20 is disposed in the inner space 74. The supporting member 12 is disposed inside a lower portion 73 of the peripheral wall portion 71. A seal 19 having a circular annular shape is disposed between the lower portion 73 of the peripheral wall portion 71 and the supporting member 12. The seal 19 is made of an elastic material such as a rubber material. The seal 19 suppresses entry of moisture into the inner space 74.

The housing 70 includes a sub-circuit-board housing space 75. The sub-circuit-board housing space 75 extends in the lateral direction. The sub-circuit-board housing space 75 is adjacent to the inner space 74. A partition wall 76 is disposed between the inner space 74 and the sub-circuit-board housing space 75. The partition wall 76 isolates the inner space 74 and the sub-circuit-board housing space 75 from each other.

The case 80 is made of a synthetic resin. The case 80 is formed by injection molding. The case 80 includes a case body 81, a lid body 82, and a connector 83. The case body 81 has a rectangular parallelepiped box shape with one side surface (the right-hand side surface in Fig. 1 and Fig. 2) open. The lid body 82 has a flat plate-like shape. The lid body 82 closes an opening in the side surface of the case body 81. The connector 83 has an oval cylindrical shape. The connector 83 extends in the lateral direction from an upper portion of the case body 81. The case body 81 and the connector 83 are integrally formed.

The case body 81 includes a side wall portion 84. The side wall portion 84 has a flat plate-like shape. The side wall portion 84 faces the lid body 82 with a space formed therebetween in the lateral direction. The side wall portion 84 has a case opening 84a that has a rectangular shape. The case opening 84a communicates with the sub-circuit-board housing space 75 of the housing 70. A circumferential edge portion of the case opening 84a in the side wall portion 84 is joined to the housing 70.

The main circuit board 90 is a printed circuit board on which electronic components are mounted. The main circuit board 90 is disposed along the vertical direction inside the case 80. A circuit board connector 91 is disposed on a surface of the main circuit board 90, the surface facing the side wall portion 84. The microcomputer 120 is mounted on the main circuit board 90. The plurality of terminals 65 of the stator 60 are connected to the main circuit board 90.

The sub circuit board 100 is a printed circuit board on which electronic components are mounted. The sub circuit board 100 is disposed along the lateral direction in the sub-circuit-board housing space 75 of the housing 70. The sub circuit board 100 is disposed perpendicular to the main circuit board 90. A first end 100a of the sub circuit board 100 is disposed in the vicinity of the main circuit board 90. A second end 100b of the sub circuit board 100 is disposed in the vicinity of the partition wall 76 of the housing 70.

A circuit board terminal 101 is disposed on the first end 100a of the sub circuit board 100. The circuit board terminal 101 is connected to the circuit board connector 91 of the main circuit board 90. The sub circuit board 100 is connected to the main circuit board 90 via the circuit board terminal 101 and the circuit board connector 91.

The magnetic sensor 110 is a rotation angle sensor. The magnetic sensor 110 is disposed on the second end 100b of the sub circuit board 100. The magnetic sensor 110 faces the permanent magnet 38 in the lateral direction with the can 20 and the partition wall 76 interposed therebetween. In other words, the magnetic sensor 110 and the permanent magnet 38 are arranged side by side in the lateral direction with the can 20 and the partition wall 76 interposed therebetween. The magnetic sensor 110 outputs a signal corresponding to the orientation of a magnetic field generated by the permanent magnet 38 (i.e., the rotation angle of the magnet rotor 31 that rotates together with the permanent magnet 38).

The microcomputer 120 is, for example, a microcomputer for an embedded device. In the microcomputer, a central processing unit, a non-volatile memory, a working memory, a communication module, a motor driver, and so forth are integrated in one package. The microcomputer 120 functions as a control device 200 that is in charge of control of the electric valve 1. The non-volatile memory, the working memory, the communication module, and the motor driver may be individual electronic components and may be externally connected to the microcomputer 120.

As illustrated in Fig. 7, the control device 200 includes a storage unit 210, a communication unit 220, a computing unit 230, and a rotation control unit 240. The non-volatile memory constitutes the storage unit 210. The central processing unit executes a program stored in the non-volatile memory and functions as the communication unit 220, the computing unit 230, and the rotation control unit 240. The working memory temporarily stores variables including a present position Pc of the valve member 40. The communication module is connected to the control unit 400 of the air-conditioning apparatus via a cable (not illustrated) that is connected to the connector 83. The motor driver is connected to the stepping motor 66 (the coil 61c of the A-phase stator 61 and the coil 62c of the B-phase stator 62).

The storage unit 210 stores, for example, a table 310 illustrated in Fig. 8. The table 310 includes a section information area 311, a pulse-number information area 312, and a step-angle information area 313.

In the section information area 311, items of information relating to sections set between the valve closing position P1 of the valve member 40 and the full-open position P2 of the valve member 40 are set. In the section information area 311, a "first section", a "second section", and a "third section" are set as the items of information relating to the sections.

In the pulse-number information area 312, items of information (pulse number information) relating to pulse numbers assigned in ascending order from the valve closing position P1 to the full-open position P2 of the valve member 40 are set. In the pulse-number information area 312, pulse numbers "1" to "1500" are set as the items of the pulse number information. The pulse numbers "1" to "800" are assigned to the "first section" of the section information area 311. The pulse numbers "801" to "1200" are assigned to the "second section" of the section information area 311. The pulse numbers "1201" to "1500" are assigned to the "third section" of the section information area 311.

Fig. 9 illustrates the relationship between the position of the valve member 40 and each of the pulse numbers. Positions "0" to "1500" of the valve member 40 are set in ascending order from the valve closing position P1 to the full-open position P2. The pulse numbers "1" to "1500" are assigned to the intervals between the positions "0" to "1500". The pulse number "1" is assigned to the interval between the position "0" and the position "1", the pulse number "2" is assigned to the interval between the position "1" and the position "2", and so on. For example, when the valve member 40 is at the position "1", the information relating to the pulse number "1" is used in order to move the valve member 40 to the position "0", and the information relating to the pulse number "2" is used in order to move the valve member 40 to the position "2".

In the step-angle information area 313, items of information (step angle information) relating to step angles each of which corresponds to one of the pulse numbers set in the pulse-number information area 312 are set. In the step-angle information area 313, the numbers of divisions of the step angle used in the full-step operation are set as the items of the step angle information. In the step-angle information area 313, "8" is set so as to correspond to the pulse numbers "1" to "800", "4" is set so as to correspond to the pulse numbers "801" to "1200", and "1" is set so as to correspond to the pulse numbers "1201" to "1500". In other words, as a step angle (a first angle) of the "first section", 7.5 degrees/8 = 0.9375 degrees is set. As a step angle (a second angle) of the "second section", 7.5 degrees/4 = 1.875 degrees is set. As a step angle (a third angle) of the "third section", 7.5 degrees/1 = 7.5 degrees is set. The stepping motor 66 has different step angles in the first section, the second section, and the third section. Note that, as the items of the step angle information, numerical values each indicating a step angle may be set.

Although the storage unit 210 stores the pulse number information and the step angle information in a table format, the storage unit 210 may store them in another format such as a mathematical expression.

As a result of the stepping motor 66 (the magnet rotor 31) being rotated on the basis of the table 310, the electric valve 1 operates as an electric valve having the flow-rate characteristics illustrated in Fig. 10.

The communication unit 220 communicates with the control unit 400 through the communication module. The communication unit 220 receives various commands from the control unit 400 and transfers the commands to the computing unit 230. The communication unit 220 acquires the state of the electric valve 1 from the computing unit 230 and the rotation control unit 240 and transmits it to the control unit 400. The communication unit 220 receives a valve-member movement command from the control unit 400. The valve-member movement command includes information relating to a moving target position Pt of the valve member 40, and the moving target position Pt is designated as the valve opening degree. Note that the moving target position Pt may be designated as a relative movement distance (the number of pulses or the like) from the present position Pc of the valve member 40. The present position Pc of the valve member 40 is stored in the working memory.

In the electric valve 1, the valve opening degrees 0[%] to 100[%] that are designated by the control unit 400 correspond to the positions "0" to "1500" of the valve member 40. When the number that indicates the present position Pc of the valve member 40 is smaller than the number that indicates the moving target position Pt, the direction of rotation of the stepping motor 66 is a direction (a valve opening direction) in which the valve member 40 moves away from the valve seat 18. When the number that indicates the present position Pc of the valve member 40 is larger than the number that indicates the moving target position Pt, the direction of rotation of the stepping motor 66 is a direction (a valve closing direction) in which the valve member 40 comes closer to the valve seat 18.

The computing unit 230 performs various computing operations. When the communication unit 220 receives the valve-member movement command, the computing unit 230 acquires the position of the valve member 40 corresponding to the valve opening degree designated by the moving target position Pt of the valve-member movement command. For example, when the valve opening degree is 10[%], the computing unit 230 acquires the position "150" as the moving target position Pt. When the valve opening degree is 50[%], the computing unit 230 acquires the position "750" as the moving target position Pt. When the valve opening degree is 90[%], the computing unit 230 acquires the position "1350" as the moving target position Pt.

Then, the computing unit 230 acquires the pulse number between the present position Pc (a starting point) of the valve member 40 and the moving target position Pt (a destination point) of the valve member 40. For example, when the present position Pc is the position "0" and the moving target position Pt is the position "150", the computing unit 230 acquires the pulse numbers "1" to "150". When the present position Pc is the position "150" and the moving target position Pt is the position "750", the computing unit 230 acquires the pulse numbers "151" to "750". When the present position Pc is the position "750" and the moving target position Pt is the position "300", the computing unit 230 acquires the pulse numbers "750" to "301".

In addition, the computing unit 230 acquires the rotation angle of the magnet rotor 31 on the basis of the signal output by the magnetic sensor 110.

The rotation control unit 240 acquires the items of the step angle information, each of which corresponds to one of the pulse numbers, one by one from the table 310 in the order of the pulse numbers assigned from the present position Pc of the valve member 40 to the moving target position Pt. Then, the rotation control unit 240 calculates the step angle by using the step angle information and inputs the pulses, the step angles, and the rotation direction to the motor driver so as to rotate the stepping motor 66.

In the rotation control unit 240, the pulse rate when the valve member 40 is in the first section is set to be eight times the pulse rate when the valve member 40 is in the third section. In the rotation control unit 240, the pulse rate when the valve member 40 is in the second section is set to be four times the pulse rate when the valve member 40 is in the third section. The pulse rate is represented by the number of pulses input per second (PPS). In the present embodiment, when the valve member 40 is in the first section, the pulse rate is 1000 [PPS]. When the valve member 40 is in the second section, the pulse rate is 500 [PPS]. When the valve member 40 is in the third section, the pulse rate is 125 [PPS].

In addition, the rotation control unit 240 determines the success or failure of the valve-member movement command. More specifically, the rotation control unit 240 compares the rotation angle of the magnet rotor 31 that is obtained by adding up the step angles, each of which corresponds to one of the pulse numbers assigned from the present position Pc to the moving target position Pt, and the rotation angle of the magnet rotor 31 that is acquired by the computing unit 230 on the basis of the signal of the magnetic sensor 110. When these rotation angles match each other, the rotation control unit 240 transmits, as a command execution result, information indicating that the valve-member movement command was successful to the control unit 400 via the communication unit 220. When these rotation angles do not match each other, the rotation control unit 240 transmits, as the command execution result, information indicating that the valve-member movement command has failed to the control unit 400 via the communication unit 220.

In the electric valve 1, the respective central axes of the supporting member 12, the valve port 17, the can 20, the magnet rotor 31, the valve stem holder 32, the guide bush 33, the valve stem 34, the valve member 40 (the tapered surface 41), and the stator 60 (the A-phase stator 61 and the B-phase stator 62) are aligned with the axis L.

An exemplary operation of the electric valve 1 will now be described.

The control device 200 of the electric valve 1 is brought into a start-up state as a result of power being supplied thereto. In the start-up state, the control device 200 performs initialization processing. The control device 200 causes the valve member 40 to move to the valve closing position P1 and then transitions to a normal operating state. In this case, the present position Pc of the valve member 40 is the valve closing position P1 (the position "0" of the valve member 40). In the normal operating state, the control device 200 waits for a command from the control unit 400. The control unit 400 determines that the electric valve 1 has the flow-rate characteristics illustrated in Fig. 10.

For example, upon receiving the valve-member movement command including the moving target position Pt that designates a valve opening degree of 90[%] from the control unit 400, the control device 200 acquires the position "1350" as the moving target position Pt. Then, the control device 200 acquires the pulse numbers "1" to "1350" assigned from the present position Pc to the moving target position Pt.

The control device 200 calculates the step angles corresponding to the pulse numbers "1" to "1350" on the basis of the table 310. Since the number indicating the present position Pc (the position "0") is smaller than the number indicating the moving target position Pt (the position "1350"), the control device 200 sets the rotation direction to the "valve opening direction". The control device 200 inputs the pulses, the step angles, and the rotation direction to the motor driver so as to rotate the stepping motor 66 (the magnet rotor 31). The valve stem holder 32 rotates together with the magnet rotor 31. The valve stem holder 32 moves upward by a screw-feed action between the internal thread 32c of the valve stem holder 32 and the external thread 33c of the guide bush 33. The valve stem 34 moves upward together with the valve stem holder 32, and the valve member 40 moves away from the valve seat 18.

The control device 200 inputs pulses at a rate of 1000 [PPS] in the first section (the pulse numbers "1" to "800"), inputs pulses at a rate of 500 [PPS] in the second section (the pulse numbers "801" to "1200"), and inputs pulses at a rate of 125 [PPS] in the third section (the pulse numbers "1201" to "1350"). In addition, the control device 200 adds up the step angles corresponding to the pulse numbers "1" to "1350".

When rotation of the stepping motor 66 at the step angles corresponding to the pulse numbers "1" to "1350" is complete, the control device 200 stores the position "1350" into the working memory as the present position Pc. In addition, the control device 200 determines the success or failure of the valve-member movement command. More specifically, the control device 200 compares the rotation angle of the magnet rotor 31 obtained by adding up the step angles and the rotation angle of the magnet rotor 31 obtained on the basis of the signal of the magnetic sensor 110. When these rotation angles match each other, the control device 200 transmits, as a command execution result, information indicating that the valve-member movement command was successful to the control unit 400. When these rotation angles do not match each other, the control device 200 transmits, as the command execution result, information indicating that the valve-member movement command has failed to the control unit 400. Then, the control device 200 waits for the next command from the control unit 400.

Next, for example, when the control device 200 receives the valve-member movement command including the moving target position Pt that designates a valve opening degree of 50[%] from the control unit 400, the control device 200 acquires the position "750" as the moving target position Pt. Then, the control device 200 acquires the pulse numbers "1350" to "751" assigned from the present position Pc to the moving target position Pt.

The control device 200 calculates the step angles corresponding to the pulse numbers "1350" to "751" on the basis of the table 310. Since the number indicating the present position Pc (the position "1350") is larger than the number indicating the moving target position Pt (the position "750"), the control device 200 sets the rotation direction to the "valve closing direction". The control device 200 inputs the pulses, the step angles, and the rotation direction to the motor driver so as to rotate the stepping motor 66 (the magnet rotor 31). The valve stem holder 32 rotates together with the magnet rotor 31. The valve stem holder 32 moves downward by the screw-feed action between the internal thread 32c of the valve stem holder 32 and the external thread 33c of the guide bush 33. The valve stem 34 moves downward together with the valve stem holder 32, and the valve member 40 comes closer to the valve seat 18.

The control device 200 inputs pulses at a rate of 125 [PPS] in the third section (the pulse numbers "1350" to "1201"), inputs pulses at a rate of 500 [PPS] in the second section (the pulse numbers "1200" to "801"), and inputs pulses at a rate of 1000 [PPS] in the first section (the pulse numbers "800" to "751"). In addition, the control device 200 adds up the step angles corresponding to the pulse numbers "1350" to "751".

When rotation of the stepping motor 66 at the step angles corresponding to the pulse numbers "1350" to "751" is complete, the control device 200 stores the position "751" into the working memory as the present position Pc. In addition, the control device 200 determines the success or failure of the valve-member movement command and transmits the command execution result of the valve-member movement command to the control unit 400. Then, the control device 200 waits for the next command from the control unit 400. Subsequently, the control device 200 performs operations in accordance with commands received thereby.

The electric valve 1 according to the present embodiment includes the valve body 10 having the valve port 17, the valve member 40 facing the valve port 17, the driving mechanism 30 that moves the valve member 40 in the vertical direction, and the control device 200 that controls the driving mechanism 30. The driving mechanism 30 includes the stepping motor 66, and rotation of the stepping motor 66 causes the valve member 40 to move. The control device 200 includes the storage unit 210, the communication unit 220, the computing unit 230, and the rotation control unit 240. The storage unit 210 is configured to store the pulse number information relating to the pulse numbers assigned in ascending order from the valve closing position P1 to the full-open position P2 of the valve member 40 and the step angle information relating to the step angles each corresponding to one of the pulse numbers. The communication unit 220 is configured to receive the valve-member movement command relating to the moving target position Pt of the valve member 40 from the control unit 400. The computing unit 230 is configured to acquire the pulse numbers assigned from the present position Pc of the valve member 40 to the moving target position Pt. The rotation control unit 240 is configured to rotate the stepping motor 66 at the step angles corresponding to the pulse numbers assigned from the present position Pc of the valve member 40 to the moving target position Pt in the order of these pulse numbers.

With this configuration, the electric valve 1 can individually set the step angle for each pulse assigned from the valve closing position P1 to the full-open position P2 of the valve member 40 and can adjust the amount of movement of the valve member 40 per pulse (i.e., the amount of change in the flow rate of the refrigerant flowing through the valve port 17). Therefore, in the electric valve 1, desired flow-rate characteristics can be obtained without depending on the shape of the valve member 40.

In addition, in the electric valve 1, the first section, the second section, and the third section are set between the valve closing position P1 and the full-open position P2 of the valve member 40. The first angle (0.9375 degrees) is set as the step angle corresponding to the pulse numbers assigned to the first section. The second angle (1.875 degrees) is set as the step angle corresponding to the pulse numbers assigned to the second section. The third angle (7.5 degrees) is set as the step angle corresponding to the pulse numbers assigned to the third section. The first angle, the second angle, and the third angles are different from one another. Consequently, the electric valve 1 can obtain flow-rate characteristics having three sections with a different amount of change in the flow rate per pulse from one another. The electric valve 1 can precisely control the flow rate within a range where the valve opening degree is relatively small.

The first angle is a step angle in the micro-step operation that is 1/n (n = 8) of the step angle in the full-step operation of the stepping motor 66. The second angle is a step angle in the micro-step operation that is 1/m (m = 4) of the step angle in the full-step operation of the stepping motor 66. The third angle is the step angle in the full-step operation of the stepping motor 66. Consequently, the electric valve 1 can obtain, with a relatively simple configuration, the flow-rate characteristics having three sections with a different amount of change in the flow rate per pulse from one another. Note that m and n may each be a natural number of two or more, with the condition that m ≠ n.

The valve member 40 has the tapered surface 41 such that its diameter decreases toward the valve port 17. When the valve member 40 is in the first section, the second section, or the third section, the flow rate is determined by the gap between the tapered surface 41 and the inner circumferential surface of the valve port 17. Consequently, the electric valve 1 can obtain, by using the valve member 40 having a relatively simple shape, the flow-rate characteristics having three sections with a different amount of change in the flow rate per pulse from one another.

The pulse rate when the valve member 40 is in the first section (a first-section pulse rate) is eight times the pulse rate when the valve member 40 is in the third section (a third-section pulse rate). The pulse rate when the valve member 40 is in the second section (a second-section pulse rate) is four times the third-section pulse rate. Consequently, in the electric valve 1, the moving speed of the valve member 40 can be the same in the first section, the second section, and the third section. As a result, the valve member 40 can be moved from the valve closing position P1 to the full-open position P2 more quickly than in the case where the pulse rate is the same in the first section, the second section, and the third section.

Note that, in the case where the first section overlaps a range from the present position Pc to the moving target position Pt, the electric valve 1 may set the first-section pulse rate to be eight times the third-section pulse rate when the number of pulses relating to the movement of the valve member 40 in the first section exceeds a predetermined reference number of pulses (e.g., 100), and the electric valve 1 may set the first-section pulse rate to be the same as the third-section pulse rate when the number of pulses relating to the movement of the valve member 40 in the first section is equal to or less than the reference number of pulses. Similarly, in the case where the second section overlaps a range from the present position Pc to the moving target position Pt, the electric valve 1 may set the second-section pulse rate to be four times the third-section pulse rate when the number of pulses relating to the movement of the valve member 40 in the second section exceeds the reference number of pulses, and the electric valve 1 may set the second-section pulse rate to be the same as the third-section pulse rate when the number of pulses relating to the movement of the valve member 40 in the second section is equal to or less than the reference number of pulses. Consequently, when the amount of movement of the valve member 40 is large in the first section or the second section, the valve member 40 can be moved at high speed, so that the time required for switching the flow rate can be shortened. In addition, when the amount of movement of the valve member 40 is small in the first section or the second section, the valve member 40 can be moved at low speed, so that the flow rate can be gently switched.

Note that, although the electric valve 1 has the flow-rate characteristics having three sections with a different amount of change in the flow rate per pulse from one another, the electric valve 1 may have another flow-rate characteristic such as an equal-percentage characteristic by appropriately setting the table 310.

### (Modifications)

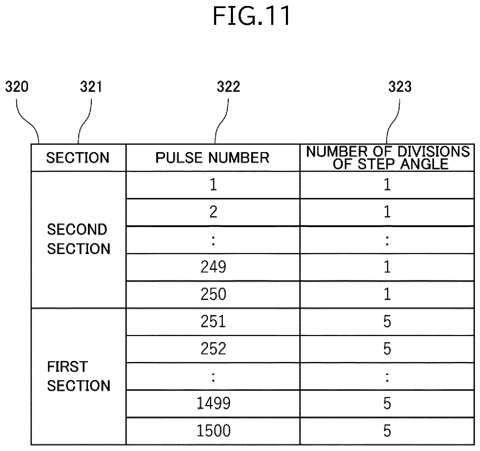

Electric valves 1A and 1B according to modifications of the above-described electric valve 1 will now be described with reference to Fig. 11 to Fig. 16.

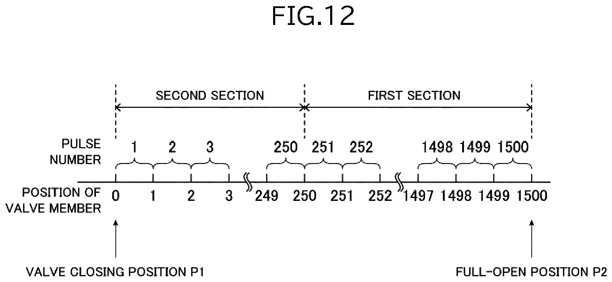

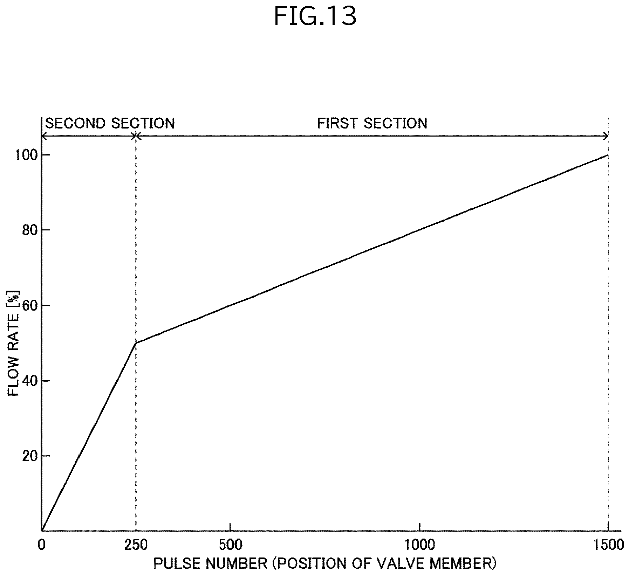

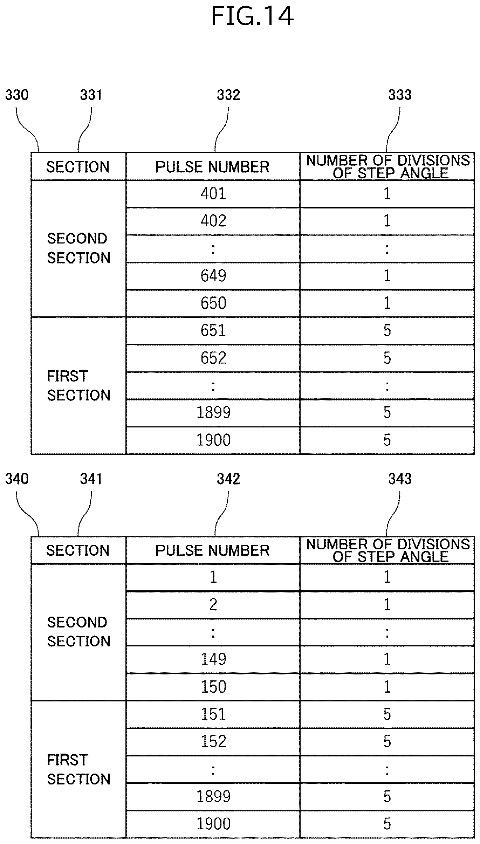

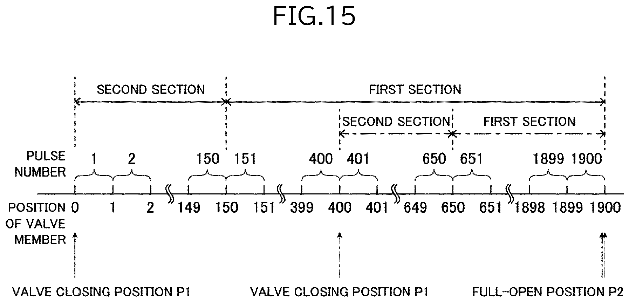

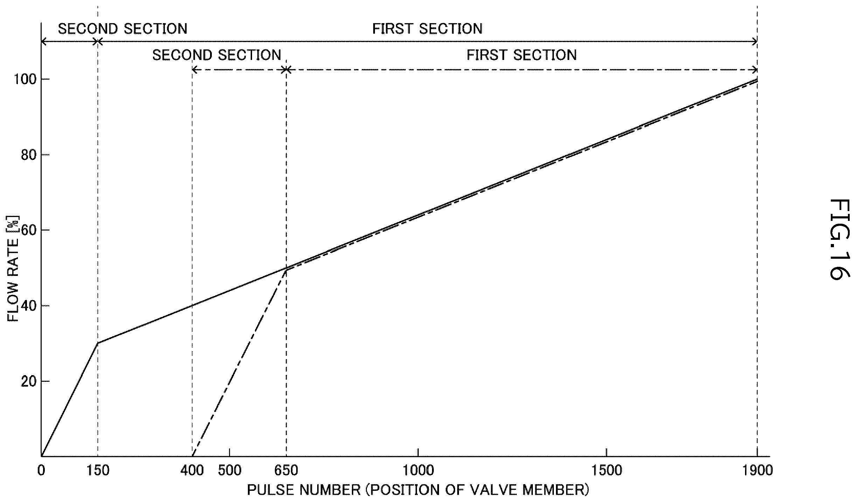

Fig. 11 is a diagram illustrating a modification of the table illustrated in Fig. 8. Fig. 12 is a diagram illustrating a relationship between each pulse number and the position of the valve member, each of the pulse numbers being shown in the table in Fig. 11 and being assigned from the valve closing position to the full-open position. Fig. 13 is a graph illustrating a relationship between the position of the valve member and the flow rate when the stepping motor of the electric valve illustrated in Fig. 1 rotates on the basis of the table illustrated in Fig. 11. Fig. 14 is a diagram illustrating another modification of the table illustrated in Fig. 8. Fig. 15 is a diagram illustrating a relationship between each pulse number and the position of the valve member, each of the pulse numbers being shown in the table in Fig. 14 and being assigned from the valve closing position to the full-open position. Fig. 16 is a graph illustrating a relationship between the position of the valve member and the flow rate (flow-rate characteristics) when the stepping motor of the electric valve illustrated in Fig. 1 rotates on the basis of the table illustrated in Fig. 14. In the graph illustrated in Fig. 16, the flow-rate characteristics in the start-up state is indicated by a one-dot chain line, and the flow-rate characteristics in the normal operating state is indicated by a solid line. In Fig. 16, although the one-dot chain line and the solid line are vertically shifted from each other in the range from the position "650" to the position "1900", they actually match each other.

The above-described electric valve 1 rotates the stepping motor 66 on the basis of the table 310, which is stored in the storage unit 210 of the control device 200 and illustrated in Fig. 8. The electric valve 1A is the electric valve 1 that has a table 320 illustrated in Fig. 11 instead of the table 310 and has flow-rate characteristics different from those of the electric valve 1. The hardware configuration of the electric valve 1A is the same as that of the electric valve 1.

In the electric valve 1A, the storage unit 210 stores the table 320 illustrated in Fig. 11. The table 320 includes a section information area 321, a pulse-number information area 322, and a step-angle information area 323.

In the section information area 321, items of information relating to the sections set between the valve closing position P1 and the full-open position P2 of the valve member 40 are set. In the section information area 321, the "second section" and the "first section" are set as the items of information relating to the sections.

In the pulse-number information area 322, items of information (pulse number information) relating to the pulse numbers assigned in ascending order from the valve closing position P1 to the full-open position P2 of the valve member 40 are set. In the pulse-number information area 322, the pulse numbers "1" to "1500" are set as the items of the pulse number information. The pulse numbers "1" to "250" are assigned to the "second section" of the section information area 321, and the pulse numbers "251" to "1500" are assigned to the "first section" of the section information area 321.

Fig. 12 illustrates the relationship between the position of the valve member 40 and each pulse number. The positions "0" to "1500" of the valve member 40 are set in ascending order from the valve closing position P1 to the full-open position P2. The pulse numbers "1" to "1500" are assigned to the intervals between the positions "0" to "1500".

In the step-angle information area 323, items of information (step angle information) relating to step angles each of which corresponds to one of the pulse numbers set in the pulse-number information area 322 are set. In the step-angle information area 323, the numbers of divisions of the step angle used in the full-step operation are set as the items of the step angle information. In the step-angle information area 323, "1" is set so as to correspond to the pulse numbers "1" to "250", and "5" is set so as to correspond to the pulse numbers "251" to "1500". In other words, as the step angle (the second angle) of the "second section", 7.5 degrees/1 = 7.5 degrees is set, and as the step angle (the first angle) of the "first section", 7.5 degrees/5 = 1.5 degrees is set. The stepping motor 66 has different step angles in the second section and the first section.

As a result of the stepping motor 66 (the magnet rotor 31) being rotated on the basis of the table 320, the electric valve 1A operates as an electric valve having the flow-rate characteristics illustrated in Fig. 13.

In the electric valve 1A, the valve opening degrees 0[%] to 100[%] that are designated by the control unit 400 correspond to the positions "0" to "1500" of the valve member 40.

In the rotation control unit 240, the pulse rate when the valve member 40 is in the first section is set to be five times the pulse rate when the valve member 40 is in the second section. In the electric valve 1A, when the valve member 40 is in the first section, the pulse rate is 625 [PPS]. When the valve member 40 is in the second section, the pulse rate is 125 [PPS].

An exemplary operation of the electric valve 1A will now be described.

The control device 200 of the electric valve 1A is brought into the start-up state as a result of power being supplied thereto. In the start-up state, the control device 200 performs initialization processing. The control device 200 causes the valve member 40 to move to the valve closing position P1 and then transitions to the normal operating state. In this case, the present position Pc of the valve member 40 is the valve closing position P1 (the position "0" of the valve member 40). In the normal operating state, the control device 200 waits for a command from the control unit 400. The control unit 400 determines that the electric valve 1A has the flow-rate characteristics illustrated in Fig. 13.

For example, when the control device 200 receives the valve-member movement command including the moving target position Pt that designates a valve opening degree of 90 [%] from the control unit 400, the control device 200 acquires the position "1350" as the moving target position Pt. Then, the control device 200 acquires the pulse numbers "1" to "1350" assigned from the present position Pc to the moving target position Pt.

The control device 200 calculates the step angles corresponding to the pulse numbers "1" to "1350" on the basis of the table 320. Since the number indicating the present position Pc (the position "0") is smaller than the number indicating the moving target position Pt (the position "1350"), the control device 200 sets the rotation direction to the "valve opening direction". The control device 200 inputs the pulses, the step angles, and the rotation direction to the motor driver so as to rotate the stepping motor 66. As a result, the valve member 40 moves away from the valve seat 18.

The control device 200 inputs pulses at a rate of 125 [PPS] in the second section (the pulse numbers "1" to "250") and inputs pulses at a rate of 625 [PPS] in the first section (the pulse numbers "251" to "1350"). In addition, the control device 200 adds up the step angles corresponding to the pulse numbers "1" to "1350".

When rotation of the stepping motor 66 at the step angles corresponding to the pulse numbers "1" to "1350" is complete, the control device 200 stores the position "1350" into the working memory as the present position Pc. In addition, the control device 200 determines the success or failure of the valve-member movement command and transmits the command execution result of the valve-member movement command to the control unit 400. Then, the control device 200 waits for the next command from the control unit 400.

Next, for example, when the control device 200 receives the valve-member movement command including the moving target position Pt that designates a valve opening degree of 10[%] from the control unit 400, the control device 200 acquires the position "150" as the moving target position Pt. Then, the control device 200 acquires the pulse numbers "1350" to "151" assigned from the present position Pc to the moving target position Pt.

The control device 200 calculates the step angles corresponding to the pulse numbers "1350" to "151" on the basis of the table 320. Since the number indicating the present position Pc (the position "1350") is larger than the number indicating the moving target position Pt (the position "150"), the control device 200 sets the rotation direction to the "valve closing direction". The control device 200 inputs the pulses, the step angles, and the rotation direction to the motor driver so as to rotate the stepping motor 66 (the magnet rotor 31). As a result, the valve member 40 comes closer to the valve seat 18.

The control device 200 inputs pulses at a rate of 625 [PPS] in the first section (the pulse numbers "1350" to "251") and inputs pulses at a rate of 125 [PPS] in the second section (the pulse numbers "250" to "151"). In addition, the control device 200 adds up the step angles corresponding to the pulse numbers "1350" to "151".

When rotation of the stepping motor 66 at the step angles corresponding to the pulse numbers "1350" to "151" is complete, the control device 200 stores the position "150" into the working memory as the present position Pc. In addition, the control device 200 determines the success or failure of the valve-member movement command and transmits the command execution result of the valve-member movement command to the control unit 400. Then, the control device 200 waits for the next command from the control unit 400. Subsequently, the control device 200 performs operations in accordance with commands received thereby.

The electric valve 1A achieves the same advantageous effects (including substantially the same advantageous effects) as the above-described electric valve 1.

In addition, in the electric valve 1A, the first section and the second section are set between the valve closing position P1 and the full-open position P2 of the valve member 40. The first angle (1.5 degrees) is set as the step angle corresponding to the pulse number assigned to the first section. The second angle (7.5 degrees) is set as the step angle corresponding to the pulse number assigned to the second section. The first angle and the second angle are different from each other. Consequently, the electric valve 1A can obtain flow-rate characteristics having two sections with a different amount of change in the flow rate per pulse from one another. The electric valve 1A can precisely control the flow rate within a range where the valve opening degree is relatively large.

The first angle is a step angle in the micro-step operation that is 1/n (n = 5) of the step angle in the full-step operation of the stepping motor 66. The second angle is the step angle in the full-step operation of the stepping motor 66. Consequently, the electric valve 1A can obtain, with a relatively simple configuration, the flow-rate characteristics having two sections with a different amount of change in the flow rate per pulse from one another. Note that n may be a natural number of two or more.

The valve member 40 has the tapered surface 41 such that its diameter decreases toward the valve port 17. When the valve member 40 is in the first section or the second section, the flow rate is determined by the gap between the tapered surface 41 and the inner circumferential surface of the valve port 17. Consequently, the electric valve 1A can obtain, by using the valve member 40 having a relatively simple shape, the flow-rate characteristics having two sections with a different amount of change in the flow rate per pulse from one another.

In addition, the pulse rate when the valve member 40 is in the first section is five times the pulse rate when the valve member 40 is in the second section. Consequently, in the electric valve 1A, the moving speed of the valve member 40 can be the same in the first section and the second section. As a result, the valve member 40 can be moved from the valve closing position P1 to the full-open position P2 more quickly than in the case where the pulse rate is the same in the first section and the second section.

The electric valve 1B is the electric valve 1 that has tables 330 and 340 illustrated in Fig. 14 instead of the table 310 illustrated in Fig. 8 and has flow-rate characteristics different from those of the electric valve 1. The hardware configuration of the electric valve 1B is the same as that of the electric valve 1.

In the electric valve 1B, the storage unit 210 stores the tables 330 and 340 illustrated in Fig. 14. The table 330 is used in the start-up state immediately after power is supplied to the electric valve 1B. The table 340 is used in the normal operating state after transitioning from the start-up state of the electric valve 1B.

The table 330 includes a section information area 331, a pulse-number information area 332, and a step-angle information area 333.

In the section information area 331, items of information relating to the sections set between the valve closing position P1 and the full-open position P2 of the valve member 40 are set. In the section information area 331, the "second section" and the "first section" are set as the items of information relating to the sections.

In the pulse-number information area 332, items of information (pulse number information) relating to the pulse numbers assigned in ascending order from the valve closing position P1 to the full-open position P2 of the valve member 40 are set. In the pulse-number information area 332, pulse numbers "401" to "1900" are set as the items of the pulse number information. The pulse numbers "401" to "650" are assigned to the "second section" of the section information area 331, and the pulse numbers "651" to "1900" are assigned to the "first section" of the section information area 331.

In the step-angle information area 333, items of information (step angle information) relating to step angles each of which corresponds to one of the pulse numbers set in the pulse-number information area 332 are set. In the step-angle information area 333, the numbers of divisions of the step angle used in the full-step operation are set as the items of the step angle information. In the step-angle information area 333, "1" is set so as to correspond to the pulse numbers "401" to "650", and "5" is set so as to correspond to the pulse numbers "651" to "1900". In other words, as the step angle (the second angle) of the "second section", 7.5 degrees/1 = 7.5 degrees is set, and as the step angle (the first angle) of the "first section", 7.5 degrees/5 = 1.5 degrees is set.

The table 340 includes a section information area 341, a pulse-number information area 342, and a step-angle information area 343.

In the section information area 341, items of information relating to the sections set between the valve closing position P1 and the full-open position P2 of the valve member 40 are set. In the section information area 341, the "second section" and the "first section" are set as the items of information relating to the sections.

In the pulse-number information area 342, items of information (pulse number information) relating to the pulse numbers assigned in ascending order from the valve closing position P1 to the full-open position P2 of the valve member 40 are set. In the pulse-number information area 342, the pulse numbers "1" to "1900" are set as the items of the pulse number information. The pulse numbers "1" to "150" are assigned to the "second section" of the section information area 341, and the pulse numbers "151" to "1900" are assigned to the "first section" of the section information area 341.

In the step-angle information area 343, items of information (step angle information) relating to step angles each of which corresponds to one of the pulse numbers set in the pulse-number information area 342 are set. In the step-angle information area 343, the numbers of divisions of the step angle used in the full-step operation are set as the items of the step angle information. In the step-angle information area 343, "1" is set so as to correspond to the pulse numbers "1" to "150", and "5" is set so as to correspond to the pulse numbers "151" to "1900". In other words, as the step angle (the second angle) of the "second section", 7.5 degrees/1 = 7.5 degrees is set, and as the step angle (the first angle) of the "first section", 7.5 degrees/5 = 1.5 degrees is set.

Fig. 15 illustrates the relationship between the position of the valve member 40 and each pulse number. In Fig. 15, the valve closing position P1, the full-open position P2, the first section, and the second section in the start-up state are each indicated by a one-dot chain line, and the valve closing position P1, the full-open position P2, the first section, and the second section in the normal operating state are each indicated by a solid line. The positions "400" to "1900" of the valve member 40 are set in ascending order from the valve closing position P1 to the full-open position P2 so as to correspond to the table 330, which is used in the start-up state. The pulse numbers "401" to "1900" are assigned to the intervals between the positions "400" to "1900". The positions "0" to "1900" of the valve member 40 are set in ascending order from the valve closing position P1 to the full-open position P2 so as to correspond to the table 340, which is used in the normal operating state. The pulse numbers "1" to "1900" are assigned to the intervals between the positions "0" to "1900".

In the table 330, the pulse number information set in the pulse-number information area 332 is start-up-state pulse-number information, and the step angle information set in the step-angle information area 333 is start-up-state step-angle information. In the table 340, the pulse number information set in the pulse-number information area 342 is normal-operating-state pulse-number information, and the step angle information set in the step-angle information area 343 is normal-operating-state step-angle information. The pulse numbers "401" to "1900" are set as the items of the start-up-state pulse-number information, and the pulse numbers "1" to "1900" are set as the items of the normal-operating-state pulse-number information. Thus, the start-up-state pulse-number information and the normal-operating-state pulse-number information are different from each other. In addition, "1" is assigned to the pulse numbers "401" to "650" of the start-up-state pulse-number information as the start-up-state step-angle information, and "5" is assigned to the pulse numbers "651" to "1900" of the start-up-state pulse-number information as the start-up-state step-angle information. Furthermore, "1" is assigned to the pulse numbers "1" to "150" of the normal-operating-state pulse-number information as the normal-operating-state step-angle information, and "5" is assigned to the pulse numbers "151" to "1900" of the normal-operating-state pulse-number information as the normal-operating-state step-angle information. Thus, the start-up-state step-angle information and the normal-operating-state step-angle information are different from each other. Note that the start-up-state pulse-number information and the normal-operating-state pulse-number information may be the same each other while the start-up-state step-angle information and the normal-operating-state step-angle information are different from each other.

In the electric valve 1B, when the communication unit 220 receives a normal-operation start command from the control unit 400, the computing unit 230 transitions from the start-up state to the normal operating state. In the start-up state, the valve opening degrees 0[%] to 100[%] that are designated by the control unit 400 correspond to the positions "400" to "1900" of the valve member 40. In the normal operating state, the valve opening degrees 0[%] to 100[%] that are designated by the control unit 400 correspond to the positions "0" to "1900" of the valve member 40. In the start-up state and the normal operating state, when the communication unit 220 receives the valve-member movement command, the computing unit 230 acquires the position of the valve member 40 that corresponds to the valve opening degree designated by the moving target position Pt of the valve-member movement command.

In the start-up state, for example, when the valve opening degree is 10[%], the computing unit 230 acquires the position "550" as the moving target position Pt. When the valve opening degree is 50[%], the computing unit 230 acquires the position "1150" as the moving target position Pt. When the valve opening degree is 80[%], the computing unit 230 acquires the position "1600" as the moving target position Pt.

In the normal operating state, for example, when the valve opening degree is 10[%], the computing unit 230 acquires the position "190" as the moving target position Pt. When the valve opening degree is 50[%], the computing unit 230 acquires the position "950" as the moving target position Pt. When the valve opening degree is 80[%], the computing unit 230 acquires the position "1520" as the moving target position Pt.

An exemplary operation of the electric valve 1B will now be described.

The control device 200 of the electric valve 1B causes the stepping motor 66 to rotate by using the table 330 in the start-up state and causes the stepping motor 66 to rotate by using the table 340 in the normal operating state.

The control device 200 of the electric valve 1B is brought into the start-up state as a result of power being supplied thereto. In the start-up state, the control device 200 performs initialization processing. The control device 200 causes the valve member 40 to move to the valve closing position P1. In this case, the present position Pc of the valve member 40 is the valve closing position P1 (the position "400" of the valve member 40). In the start-up state, the control device 200 waits for a command from the control unit 400. The control unit 400 determines that the electric valve 1B in the start-up state has the flow-rate characteristics indicated by the one-dot chain line in Fig. 16 and that the electric valve 1B in the normal operating state has the flow-rate characteristics indicated by the solid line in Fig. 16.

For example, when the control device 200 receives the valve-member movement command including the moving target position Pt that designates a valve opening degree of 80[%] from the control unit 400, the control device 200 acquires the position "1600" as the moving target position Pt. Then, the control device 200 acquires the pulse numbers "401" to "1600" assigned from the present position Pc to the moving target position Pt.

The control device 200 calculates the step angles corresponding to the pulse numbers "401" to "1600" on the basis of the table 330. Since the number indicating the present position Pc (the position "400") is smaller than the number indicating the moving target position Pt (the position "1600"), the control device 200 sets the rotation direction to the "valve opening direction". The control device 200 inputs the pulses, the step angles, and the rotation direction to the motor driver so as to rotate the stepping motor 66. As a result, the valve member 40 moves away from the valve seat 18.

The control device 200 inputs pulses at a rate of 125 [PPS] in the second section (the pulse numbers "401" to "650") and inputs pulses at a rate of 625 [PPS] in the first section (the pulse numbers "651" to "1600"). In addition, the control device 200 adds up the step angles corresponding to the pulse numbers "401" to "1600".

When rotation of the stepping motor 66 at the step angles corresponding to the pulse numbers "401" to "1600" is complete, the control device 200 stores the position "1600" into the working memory as the present position Pc. In addition, the control device 200 determines the success or failure of the valve-member movement command and transmits the command execution result of the valve-member movement command to the control unit 400. Then, the control device 200 waits for the next command from the control unit 400.

Next, upon receiving the normal-operation start command from the control unit 400, the control device 200 transitions from the start-up state to the normal operating state. By transitioning to the normal operating state, the control device 200 uses the table 340 instead of the table 330.

Next, for example, when the control device 200 receives the valve-member movement command including the moving target position Pt that designates a valve opening degree of 50[%] from the control unit 400, the control device 200 acquires the position "950" as the moving target position Pt. Then, the control device 200 acquires the pulse numbers "1600" to "951" assigned from the present position Pc to the moving target position Pt.

The control device 200 calculates the step angles corresponding to the pulse numbers "1600" to "951" on the basis of the table 340. Since the number indicating the present position Pc (the position "1600") is larger than the number indicating the moving target position Pt (the position "950"), the control device 200 sets the rotation direction to the "valve closing direction". The control device 200 inputs the pulses, the step angles, and the rotation direction to the motor driver so as to rotate the stepping motor 66. As a result, the valve member 40 comes closer to the valve seat 18.

The control device 200 inputs pulses at a rate of 625 [PPS] in the first section (the pulse numbers "1600" to "951"). In addition, the control device 200 adds up the step angles corresponding to the pulse numbers "1600" to "951".

When rotation of the stepping motor 66 at the step angles corresponding to the pulse numbers "1600" to "951" is complete, the control device 200 stores the position "951" into the working memory as the present position Pc. In addition, the control device 200 determines the success or failure of the valve-member movement command and transmits the command execution result of the valve-member movement command to the control unit 400. Then, the control device 200 waits for the next command from the control unit 400.

Next, for example, when the control device 200 receives the valve-member movement command including the moving target position Pt that designates a valve opening degree of 0[%] from the control unit 400, the control device 200 acquires the position "0" as the moving target position Pt. Then, the control device 200 acquires the pulse numbers "950" to "1" assigned from the present position Pc to the moving target position Pt.

The control device 200 calculates the step angles corresponding to the pulse numbers "950" to "1" on the basis of the table 340. Since the number indicating the present position Pc (the position "950") is larger than the number indicating the moving target position Pt (the position "0"), the control device 200 sets the rotation direction to the "valve closing direction". The control device 200 inputs the pulses, the step angles, and the rotation direction to the motor driver so as to rotate the stepping motor 66. As a result, the valve member 40 comes into contact with the valve seat 18.

The control device 200 inputs pulses at a rate of 625 [PPS] in the first section (the pulse numbers "950" to "151") and inputs pulses at a rate of 125 [PPS] in the second section (the pulse numbers "150" to "1"). In addition, the control device 200 adds up the step angles corresponding to the pulse numbers "950" to "1".

When rotation of the stepping motor 66 at the step angles corresponding to the pulse numbers "950" to "1" is complete, the control device 200 stores the position "0" into the working memory as the present position Pc. In addition, the control device 200 determines the success or failure of the valve-member movement command and transmits the command execution result of the valve-member movement command to the control unit 400. Then, the control device 200 waits for the next command from the control unit 400. Subsequently, the control device 200 performs operations in accordance with commands received thereby.

The electric valve 1B achieves the same advantageous effects (including substantially the same advantageous effects) as the electric valve 1 and the electric valve 1A that have been described above.

The storage unit 210 stores the table 330 and the table 340. In the start-up state, the control device uses the pulse number information and the step angle information (the start-up-state pulse-number information and the start-up-state step-angle information) set in the table 330. In the normal operating state, the control device uses the pulse number information and the step angle information (the normal-operating-state pulse-number information and the normal-operating-state step-angle information) set in the table 340. Consequently, the electric valve 1B can change the flow-rate characteristics during its operation and can respond more flexibly to requirements of the system in which the electric valve 1B is incorporated.

In addition, when the control device 200 in the start-up state receives the normal-operation start command from the control unit 400, the control device 200 transitions to the normal operating state. Consequently, the operating state of the control device 200 can be changed by the control unit 400. Thus, compared with the case where the control device 200 autonomously changes its operating state, a discrepancy can be prevented from occurring between the operating state of the control device 200 as determined by the control unit 400 and the actual operating state of the control device 200.

Note that, when the valve member 40 moves to a predetermined start-up completion position (for example, position "650" in Fig. 16) when the control device 200 is in the start-up state, the control device 200 may autonomously transition to the normal operating state.

Although the electric valve 1 is a direct-driving electric valve that includes the driving mechanism 30 using the rotation of the magnet rotor 31 without speed being reduced, the present invention is also applicable to an electric valve that includes a driving mechanism having a mechanism for reducing rotation speed of a magnet rotor.

In the present specification, the terms such as "circular cylindrical" and "circular columnar" indicating shapes are also used for members and portions thereof that substantially have the shapes indicated by these terms. For example, a "member that has a circular cylindrical shape" includes a member that has a circular cylindrical shape and a member that has a substantially circular cylindrical shape.

Although the embodiments of the present invention have been described above, the present invention is not limited to the configurations of the embodiments. Addition and removal of components and design changes may be suitably made to the above-described embodiments by those skilled in the art, and other embodiments obtained by suitably combining features of the above-described embodiments are also within the scope of the present invention as long as they not contrary to the gist of the present invention.

### Reference Signs List

1, 1A, 1B ... electric valve, 10 ... valve body, 11 ... body member, 11a ... mounting hole, 12 ... supporting member, 12a ... fitting hole, 13 ... connecting member, 14 ... valve chamber, 15 ... flow channel, 16 ... flow channel, 17 ... valve port, 18 ... valve seat, 19 ... seal, 20 ... can, 30 ... driving mechanism, 31 ... magnet rotor, 32 ... valve stem holder, 32c ... internal thread, 33 ... guide bush, 33a ... base portion, 33b ... valve-stem supporting portion, 33c ... external thread, 34 ... valve stem, 34a ... large-diameter portion, 34b ... small-diameter portion, 34c ... step portion, 35 ... supporting ring, 36 ... push nut, 37 ... valve closing spring, 38 ... permanent magnet, 39 ... fixing member, 40 ... valve member, 40a ... tip end, 41 ... tapered surface, 50 ... stator unit, 60 ... stator, 60a ... stator inner circumferential surface, 61 ... A-phase stator, 61a ... pole tooth, 61b ... pole tooth, 61c ... coil, 62 ... B-phase stator, 62a ... pole tooth, 62b ... pole tooth, 62c ... coil, 63 ... molded member, 64 ... terminal supporting portion, 65 ... terminal, 66 ... stepping motor, 70 ... housing, 71 ... peripheral wall portion, 71a ... inner circumferential surface, 72 ... upper wall portion, 72a ... inner surface, 73 ... lower portion, 74 ... inner space, 75 ... sub-circuit-board housing space, 76 ... partition wall, 80 ... case, 81 ... case body, 82 ... lid body, 83 ... connector, 84 ... side wall portion, 84a ... case opening, 90 ... main circuit board, 91 ... circuit board connector, 100 ... sub circuit board, 100a ... first end, 100b ... second end, 101 ... circuit board terminal, 110 ... magnetic sensor, 120 ... microcomputer, 200 ... control device, 210 ... storage unit, 220 ... communication unit, 230 ... computing unit, 240 ... rotation control unit, 310 ... table, 311 ... section information area, 312 ... pulse-number information area, 313 ... step-angle information area, 320 ... table, 321 ... section information area, 322 ... pulse-number information area, 323 ... step-angle information area, 330 ... table, 331 ... section information area, 332 ... pulse-number information area, 333 ... step-angle information area, 340 ... table, 341 ... section information area, 342 ... pulse-number information area, 343 ... step-angle information area, 400 ... control unit, L ... axis, P1 ... valve closing position, P2 ... full-open position, Pc ... present position, Pt ... moving target position

## Claims

1. An electric valve comprising:
a valve body that has a valve port;
a valve member that faces the valve port;
a driving mechanism that moves the valve member in a direction in which the valve member faces the valve port; and
a control device that controls the driving mechanism,
wherein the driving mechanism includes a stepping motor, and rotation of the stepping motor causes the valve member to move, and
wherein the control device includes
a storage unit configured to store pulse number information and step angle information, the pulse number information relating to pulse numbers that are sequentially assigned from a reference position of the valve member to a full-open position of the valve member, and the step angle information relating to step angles each of which corresponds to one of the pulse numbers,
a communication unit configured to receive a valve-member movement command from an external device, the valve-member movement command relating to a moving target position of the valve member,
a computing unit configured to acquire the pulse numbers assigned from a present position of the valve member to the moving target position of the valve member, and
a rotation control unit configured to rotate the stepping motor at the step angles corresponding to the pulse numbers, which are assigned from the present position of the valve member to the moving target position of the valve member, in an order of the pulse numbers.

2. The electric valve according to Claim 1,
wherein a first section, a second section, and a third section are set between the reference position of the valve member and the full-open position of the valve member,
wherein a first angle is set as the step angle corresponding to the pulse numbers assigned to the first section,
wherein a second angle is set as the step angle corresponding to the pulse numbers assigned to the second section,
wherein a third angle is set as the step angle corresponding to the pulse numbers assigned to the third section, and
wherein the first angle, the second angle, and the third angle are different from one another.

3. The electric valve according to Claim 2,
wherein the first angle is a step angle in a micro-step operation that is 1/n of a step angle in a full-step operation of the stepping motor,
wherein the second angle is a step angle in a micro-step operation that is 1/m of the step angle in the full-step operation of the stepping motor,
wherein the third angle is the step angle in the full-step operation of the stepping motor, and
wherein m and n are each a natural number of two or more, with a condition that m ≠ n.

4. The electric valve according to Claim 2 or Claim 3,
wherein the valve member has a tapered surface such that a diameter of the valve member decreases toward the valve port, and
wherein, when the valve member is in the first section, the second section, or the third section, a flow rate is determined by a gap between the tapered surface and an inner circumferential surface of the valve port.

5. The electric valve according to Claim 3,
wherein a pulse rate when the valve member is in the first section is n times a pulse rate when the valve member is in the third section, and
wherein a pulse rate when the valve member is in the second section is m times the pulse rate when the valve member is in the third section.

6. The electric valve according to Claim 1,
wherein a first section and a second section are set between the reference position of the valve member and the full-open position of the valve member,
wherein a first angle is set as the step angle corresponding to the pulse numbers assigned to the first section,
wherein a second angle is set as the step angle corresponding to the pulse numbers assigned to the second section, and
wherein the first angle and the second angle are different from each other.

7. The electric valve according to Claim 6,
wherein the first angle is a step angle in a micro-step operation that is 1/n of a step angle in a full-step operation of the stepping motor,
wherein the second angle is the step angle in the full-step operation of the stepping motor, and
wherein n is a natural number of two or more.

8. The electric valve according to Claim 6 or Claim 7,
wherein the valve member has a tapered surface such that a diameter of the valve member decreases toward the valve port, and
wherein, when the valve member is in the first section or the second section, a flow rate is determined by a gap between the tapered surface and an inner circumferential surface of the valve port.

9. The electric valve according to Claim 7,
wherein a pulse rate when the valve member is in the first section is n times a pulse rate when the valve member is in the second section.

10. The electric valve according to Claim 1,
wherein the storage unit stores
start-up-state pulse-number information and start-up-state step-angle information, the start-up-state pulse-number information relating to pulse numbers that are sequentially assigned from the reference position of the valve member to the full-open position of the valve member, and the start-up-state step-angle information relating to step angles each of which corresponds to one of the pulse numbers of the start-up-state pulse-number information, and
normal-operating-state pulse-number information and normal-operating-state step-angle information, the normal-operating-state pulse-number information relating to pulse numbers that are sequentially assigned from the reference position of the valve member to the full-open position of the valve member, and the normal-operating-state step-angle information relating to step angles each of which corresponds to one of the pulse numbers of the normal-operating-state pulse-number information, and
wherein the control device
uses, in a start-up state, the start-up-state pulse-number information and the start-up-state step-angle information as the pulse number information and the step angle information, and
uses, in a normal operating state after transitioning from the start-up state, the normal-operating-state pulse-number information and the normal-operating-state step-angle information as the pulse number information and the step angle information.

11. The electric valve according to Claim 10,
wherein, when the communication unit receives a normal-operation start command from an external device in the start-up state, the control device makes a transition to the normal operating state.

12. The electric valve according to Claim 10 or Claim 11,
wherein, when the valve member moves to a predetermined start-up completion position in the start-up state, the control device makes a transition to the normal operating state.
